**Europäisches Patentamt**

**European Patent Office**

**Office européen des brevets**

(19)

(11) Veröffentlichungsnummer : **0 185 903**
**B1**

(12) **EUROPÄISCHE PATENTSCHRIFT**

(45) Veröffentlichungstag der Patentschrift :
23.12.87

(51) Int. Cl.⁴ : **B 60 T 15/04**, B 60 T 15/16

(21) Anmeldenummer : 85114282.8

(22) Anmeldetag : 09.11.85

(54) **Führerbremsventil für eine Druckluftbremse von Schienenfahrzeugen.**

(30) Priorität : 14.12.84 CH 5956/84

(43) Veröffentlichungstag der Anmeldung :
02.07.86 Patentblatt 86/27

(45) Bekanntmachung des Hinweises auf die Patenterteilung : 23.12.87 Patentblatt 87/52

(84) Benannte Vertragsstaaten :
AT BE CH DE FR GB IT LI NL SE

(56) Entgegenhaltungen :
DE-B- 1 023 069
FR-A- 1 323 513

(73) Patentinhaber : **Werkzeugmaschinenfabrik Oerlikon-
Bührle AG**
**Birchstrasse 155**
**CH-8050 Zürich (CH)**

(72) Erfinder : **Malina, Alan**
**Eichweg 19**
**CH-8302 Kloten (CH)**
Erfinder : **Thoeny, Riet**
**Im Hürdli 4**
**CH-8152 Glattbrugg (CH)**

**Beschreibung**

Die Erfindung bezieht sich auf ein Führerbremsventil für eine Druckluftbremse von Schienenfahrzeugen, mit einem verschwenkbaren Führerbremshebel, der mechanisch mit einer im Führerbremsventil gelagerten Schaltwelle verbunden ist.

Lokomotiven bzw. Triebfahrzeuge weisen solche Führerbremsventile in jedem Führerstand auf. Damit wird jeweils die Bremsanlage gesteuert, derart, dass zu Bremsen der Führerbremshebel immer gezogen werden muss. Wird die Fahrtrichtung des Triebfahrzeuges gewechselt, z. B. von Vorwärtsfahrt auf Rückwärtsfahrt, so wird der bisher benützte Führerstand auf der einen Seite des Fahrzeuges verriegelt und derjenige auf der anderen Seite bedient, d. h. ein eigentliches Rückwärtsfahren wird vermieden. Weisen aber Triebfahrzeuge nur einen Führerstand auf, wobei der Führersitz zum Rückwärtsfahren um 180° geschwenkt werden kann, ist es aus Sicherheitsgründen nachteilig, dass der Fahrzeugführer bei Verwendung nur eines Führerbremsventiles in der einen Fahrtrichtung den Führerbremshebel zum Bremsen stossen muss.

Die Erfindung, wie sie in den Ansprüchen gekennzeichnet ist, löst die Aufgabe, ein Führerbremsventil zu schaffen, mit dem der Fahrzeugführer in der Lage ist, die Bremsanlage mit dem gleichen Führerbremsventil bei Vorwärts- und Rückwärts-Fahrtrichtungen zu steuern und dabei wie üblich zum Bremsen den Führerbremshebel zu ziehen.

Die durch die Erfindung erreichten Vorteile sind im wesentlichen darin zu sehen, dass ein einziger, ortsfest angeordneter Führerbremshebel vorgesehen ist, der vorzugsweise koaxial zur Schaltwelle angeordnet werden kann.

Die Erfindung wird nachfolgend anhand einer lediglich ein Ausführungsbeispiel darstellenden Zeichnung erläutert.

Es zeigt :

Fig. 1 schematisch dargestellt ein Führerbremsventil und einen Führersitz für Vorwärts- und Rückwärtsfahrt in Aufsicht,

Fig. 2 einen Teil eines Führerbremsventils und im Schnitt darauf aufgesetzt eine Umschaltvorrichtung für Vorwärtsfahrt,

Fig. 3 wie Fig. 2, jedoch für Rückwärtsfahrt und

Fig. 4 in Ansicht das Führerbremsventil von Fig. 2 um 90° gedreht.

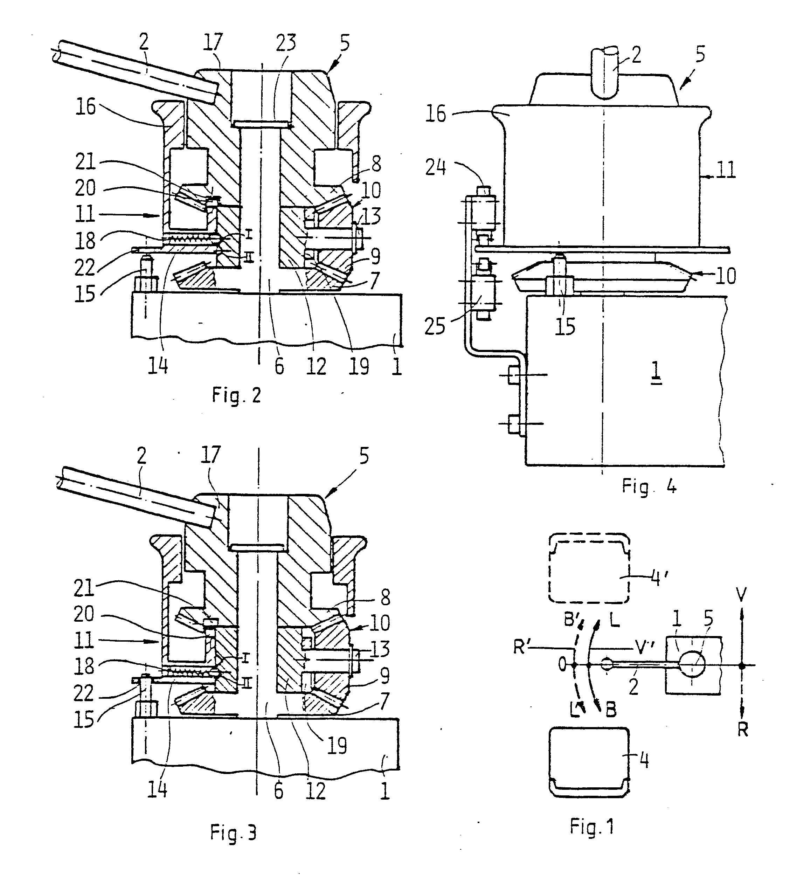

In Fig. 1 ist ein Führerbremsventil 1 mit Führerbremshebel 2, ein Führersitz 4 für Vorwärtsfahrt und ein um 180° verschwenkter Führersitz 4' für Rückwärtsfahrt dargestellt. Der Führerbremshebel 2 ist für verschiedene, nicht im einzelnen gezeigte Betriebsstellungen verschwenkbar ausgebildet. Wie später genauer erläutert wird, kann ein Schaltteil einer Umschaltvorrichtung 5 zur Fahrtrichtungsänderung in einer Nullstellung 0 hinuntergedrückt oder heraufgezogen werden. In den beiden Fahrtrichtungsstellungen ändert sich die Verschwenkungsrichtung des Führerbremshebels 2 für die gleiche Betriebsart, z. B. ist zum Lösen der Bremse bei Vorwärtsfahrt der Führerbremshebel 2 nach oben in Richtung L zu verschwenken, jedoch bei Rückwärtsfahrt wird dies durch Verschwenken nach unten in Richtung L' erreicht. Für den Fahrzeugführer selbst bleiben die Verschwenkungsrichtungen für dieselben Betriebsarten die gleichen, z. B. zum Bremsen bei Vorwärtsfahrt wird der Führerbremshebel 2 in Richtung B' zum Führersitz 4 und bei Rückwärtsfahrt in Richtung B' zum Führersitz 4' verschwenkt, d. h. bei beiden Fahrtrichtungen zieht der Fahrzeugführer den Führerbremshebel 2 zum Bremsen. Die dargestellten Verschwenkungen V' bzw. R' entsprechen dabei sinngemäss den Vorwärts- bzw. Rückwärtsfahrtrichtungen V bzw. R.

In den Fig. 2-4 ist die Umschaltvorrichtung 5 auf einem Führerbremsventil 1 bzw. an einer in diesem drehbar gelagerten Schaltwelle 6 montiert dargestellt. Das Führerbremsventil 1 selbst ist nicht näher dargestellt, denn es kann jedes bekannte Führerbremsventil für direkt oder indirekt wirkende, pneumatisch, elektrisch oder elektropneumatisch steuerbare Druckluftbremsen erfindungsgemäss mit der Umschaltvorrichtung 5 versehen werden, sofern es eine Schaltwelle 6 aufweist. Die Umschaltvorrichtung 5 wird gebildet aus einem Umkehrgetriebe 10, in dieser Ausführung aus einem Umkehrkegelradgetriebe, mit einem ersten Zahnrad 7, einem zweiten Zahnrad 8 und einem dritten Zahnrad 9 als Zwischenrad und einer Blockiereinheit 11, enthaltend einen Träger 12 mit einem Lagerzapfen 13 für das Zwischenrad, einen Mitnehmer 14, einen Verriegelungsbolzen 15 und als Umschaltelement eine Umschaltbüchse 16. In diesem Beispiel bilden zur Vereinfachung Mitnehmer 14 und Umschaltbüchse 16, zweites Zahnrad 8 und ein Träger 17, an dem der Führerbremshebel 2 befestigt ist, und Schaltwelle 6 und erstes Zahnrad 7 je eine Baueinheit. Der Mitnehmer 14 ist auf dem Träger 12, der seinerseits auf der Schaltwelle zwischen dem ersten und zweiten Zahnrad 7 und 8 drehbar gelagert ist, in axialer Richtung verschiebbar und mit einer federbelasteten Kugelraste 18 in zwei Stellungen I und II fixierbar angeordnet und ausgebildet. Weiter ist er versehen mit einem Schlitz 19, in dem der Lagerzapfen 13 geführt ist, einem Mitnahmezapfen 20, welcher in eine Mitnahmebohrung 21 am zweiten Zahnrad 8 passt, und einer Verriegelungsbohrung 22, welche zur Aufnahme des am Führerbremsventil 1 ortsfest angebrachten Verriegelungsbolzen 15 dient. Zum einfachen Handhaben ist am oberen Ende der Umschaltbüchse 16 ein Wulst vorhanden. Das zweite Zahnrad 8 ist auf der Schaltwelle 6 drehbar gelagert und in axialer Richtung durch einen mit dieser verschraubten Deckel 23 gehalten.

Ist der Mitnehmer 14 durch die Kugelraste 18 am Träger 12 in der Stellung I gemäss Fig. 2 fixiert, so greift der Mitnahmezapfen 20 in die Mitnahmebohrung 21 ein und blockiert mit dem Schlitz 19 eine Relativdrehung zwischen dem zweiten Zahnrad 8 und dem Träger 12. Damit kann das Zwischenrad 9 nicht am zweiten Zahnrad 8 abwälzen und in der Folge auch nicht am ersten Zahnrad 7. Das Umkehrgetriebe 10 ist in sich selbst blockiert. Gegenüber dem Führerbremsventil 1 findet aber keine Verriegelung statt, weil der Verriegelungsbolzen 15 nicht in die Verriegelungsbohrung 22 eingreift. Der Führerbremshebel 2 kann also in die Betriebsstellungen L und B gemäss Fig. 1 verschwenkt werden, wobei die ganze Umschaltvorrichtung 5 um die Schaltwellenachse verdreht wird, inklusiv Schaltwelle 5 aber exklusiv Verriegelungsbolzen 15.

Ist der Mitnehmer 14 am Träger 12 in der Stellung II gemäss Fig. 3 fixiert, in dem die Umschaltbüchse in der Nullstellung 0 hinuntergedrückt wird und damit Verriegelungsbolzen 15 und Verriegelungsbohrung 22 ineinander greifen und Mitnahmezapfen 20 und Mitnahmebohrung 21 nicht im Eingriff stehen, so ist die Blockiereinheit 11 gegenüber dem Führerbremsventil 1 verriegelt, das Umkehrgetriebe 10 aber im Freilauf. Erfolgt nun eine Verschwenkung des Führerbremshebels 2 und damit des zweiten Zahnrades 8, so wird die Verschwenkungsrichtung des ersten Zahnrades 7 durch das Zwischenrad 9 umgekehrt und damit auch der Drehsinn der Schaltwelle 6.

Wird die Stellung I als Vorwärts-Fahrtstellung und die Stellung II als Rückwärts-Fahrtstellung definiert sowie der Führersitz 4 bzw. 4' jeweils um 180° verschwenkt und die Verschwenkungsrichtungen und Betriebsfunktionen für den Führerbremshebel 2 gemäss Fig. 1 festgelegt, so ergibt sich in beiden Fahrtrichtungsstellungen für den Führerbremshebel 2 und für die Schaltwelle 6 die gleiche Verschwenkungs- bzw. Drehrichtung für die gleiche Betriebsart, also z. B. zum Bremsen wird der Führerbremshebel 2 vom Fahrzeugführer gezogen und die Schaltwelle 6 dreht sich im Gegenuhrzeigersinn.

In Fig. 4 sind zwei elektrische Umschalter 24 und 25 dargestellt, wobei je einer in einer der beiden Stellungen I und II durch den Mitnehmer 14 eingeschaltet wird und damit die Führersteueranlage für die entsprechende Vorwärts- oder Rückwärts-Fahrtstellung verriegelt.

### Patentansprüche

1. Führerbremsventil für eine Druckluftbremse von Schienenfahrzeugen, mit einem verschwenkbaren Führerbremshebel (2), der mechanisch mit einer im Führerbremsventil (1) gelagerten Schaltwelle (6) verbunden ist, gekennzeichnet durch eine Umschaltvorrichtung (5) zum Ändern der Verschwenkungsrichtung des Führerbremshebels (2), enthaltend ein Umkehrgetriebe (10), das einenends mit dem Führerbremshebel (2) und andernends mit der Schaltwelle (6) fest verbunden ist, und eine Blockiereinheit (11), welche das Umkehrgetriebe (10) bei der einen Fahrtrichtungsstellung (Vorwärts- oder Rückwärtsfahrt) blockiert und in der anderen Fahrtrichtungsstellung im Freilauf hält.

2. Führerbremsventil gemäss Anspruch 1, dadurch gekennzeichnet, dass die Blockiereinheit (11) einen Träger (12) und einen Mitnehmer (14) für ein Zwischenrad (9) des Umkehrgetriebes (10) sowie ein Umschaltelement (16) für die zwei Fahrtrichtungsstellungen aufweist.

3. Führerbremsventil gemäss Anspruch 1, dadurch gekennzeichnet, dass ein erstes Zahnrad (7) mit der Schaltwelle (6) und ein zweites Zahnrad (8) mit dem Führerbremshebel (2) fest verbunden und das zweite Zahnrad (8) auf der Schaltwelle (6) drehbar gelagert sind.

4. Führerbremsventil gemäss Anspruch 2 und 3, dadurch gekennzeichnet, dass der Träger (12) auf der Schaltwelle (6) zwischen dem ersten und dem zweiten Zahnrad (7 und 8) gelagert ist und daran ein drittes Zahnrad als Zwischenrad (9) drehbar an einem Lagerzapfen (13) und der Mitnehmer (14) axial verschiebbar und in den zwei Fahrtrichtungsstellungen fixierbar angeordnet sind.

5. Führerbremsventil gemäss Anspruch 4, dadurch gekennzeichnet, dass der Mitnehmer (14) einerseits durch den Lagerzapfen (13) des dritten Zahnrades (9) und anderseits in der einen Fahrtrichtungsstellung am Führerbremsventil (1) und in der anderen Fahrtrichtungsstellung am zweiten Zahnrad (8) ortsfest gehalten ist.

6. Führerbremsventil gemäss Anspruch 5, dadurch gekennzeichnet, dass in der Vorwärts-Fahrtrichtungsstellung der Mitnehmer (14) am zweiten Zahnrad (8) gehalten ist.

7. Führerbremsventil gemäss einem der vorangehenden Ansprüche, dadurch gekennzeichnet, dass das Umkehrgetriebe (10) als Umkehrkegelradgetriebe ausgebildet ist.

### Claims

1. A driver's brake valve for an air pressure brake of a railway vehicle, having a driver's brake lever (2) which is swivel — mounted and is connected mechanically to a control shaft (6) mounted in the driver's brake valve (1), characterised by a changeover device (5) for changing the direction in which the driver's brake lever (2) is swung, containing a reversing gear arrangement (10) permanently connected at one end to the driver's brake lever (2) and at the other end to the control shaft (6) and a blocking unit (11) which blocks the reversing gear arrangement (10) in the one direction of travel position (forwards or reverse travel) and keeps it free running in the other direction of travel position.

2. The driver's brake valve according to Claim 1, characterised in that the blocking unit (11) exhibits a support (12) and a driver (14) for an intermediate gear (9) of the reversing gear arrangement (10) and a changeover member (16) for the two direction of travel positions.

3. The driver's brake valve according to Claim 1, characterised in that a first gear (7) is permanently connected to the control shaft (6) and a second gear (8) is permanently connected to the driver's brake lever (2) and the second gear (8) is rotatably mounted on control shaft (6).

4. The driver's brake valve according to Claim 2 and 3, characterised in that the support (12) is mounted on the control shaft (6) between the first and second gear (7 and 8) and on it a third gear as intermediate gear (9) is rotatably arranged on a bearing journal (13) and the driver (14) can be axially displaced and located in the two direction of travel positions.

5. The driver's brake valve according to Claim 4, characterised in that the driver (14) is on the one hand fixedly held by the bearing journal (13) of the third gear (9), and on the other hand at the driver's brake valve (1) in the one direction of travel position and at the second gear (8) in the other direction of travel position.

6. The driver's brake valve according to Claim 5, characterised in that in the forward direction of travel position the driver (14) is held at the second gear (8).

7. The driver's brake valve according to any one of the preceding claims, characterised in that the reversing gear arrangement (10) is a reversing bevel gear arrangement.

**Revendications**

1. Robinet de frein de mécanicien pour frein à air comprimé de véhicules sur rails, avec un levier de frein de mécanicien (2), susceptible de pivoter, et qui est relié mécaniquement à un arbre de commutation (8) monté dans le robinet de frein de mécanicien (1), robinet de frein caractérisé en ce qu'il comporte un dispositif de commutation (5) pour changer le sens de pivotement du levier de frein de mécanicien (2), dispositif comportant un mécanisme d'inversion (10) dont une extrémité est solidaire du levier de frein de mécanicien (2), tandis que son autre extrémité est solidaire de l'arbre de commutation (6), et comportant une unité de blocage (11) qui bloque le mécanisme d'inversion (10) dans l'une des positions de sens de déplacement (déplacement vers l'avant ou déplacement vers l'arrière) et qui le maintient libre dans l'autre position de sens de déplacement.

2. Robinet de frein de mécanicien selon la revendication 1, caractérisé en ce que l'unité de blocage (11) comporte un support (12) et un organe d'entraînement (14) pour une roue intermédiaire (9) du mécanisme d'inversion (10), ainsi qu'un élément de commutation (16) pour les deux positions de sens de déplacement.

3. Robinet de frein de mécanicien selon la revendication 1, caractérisé en ce qu'une première roue dentée (7) est solidaire de l'arbre de commutation (6) et qu'une seconde roue dentée (8) est solidaire du levier de frein de mécanicien (2), tandis que cette seconde roue dentée (8) est montée sur l'arbre de commutation (6) de façon à pouvoir tourner.

4. Robinet de frein de mécanicien selon les revendications 2 et 3, caractérisé en ce que le support (12) est monté sur l'arbre de commutation (6) entre la première et la seconde roue dentée (7 et 8), tandis que sur ce support est disposée, de façon à pouvoir tourner sur un axe de palier (13), une troisième roue dentée jouant le rôle de roue intermédiaire (9), et que l'organe d'entraînement (14) est susceptible de coulisser axialement et d'être fixé dans les deux positions de sens de déplacement.

5. Robinet de frein de mécanicien selon la revendication 4, caractérisé en ce que l'organe d'entraînement (14) est maintenu en place, d'une part, par l'axe de palier (13) de la troisième roue dentée (9) et, d'autre part, dans l'une des positions de sens de déplacement, sur le robinet de frein de mécanicien (1), et dans l'autre position de sens de déplacement, sur la deuxième roue dentée (8).

6. Robinet de frein de mécanicien selon la revendication 5, caractérisé en ce que, dans la position de sens de déplacement vers l'avant, l'organe d'entraînement (14) est maintenu sur la seconde roue dentée (8).

7. Robinet de frein de mécanicien selon une des précédentes revendications, caractérisé en ce que le mécanisme d'inversion (10) est un mécanisme d'inversion à roues coniques.

0 185 903

Fig. 2

Fig. 3

Fig. 4

Fig. 1